# EUROPÄISCHE PATENTANMELDUNG

(11) **EP 1 045 224 A2**
(43) Veröffentlichungstag der Anmeldung: **18.10.2000**
(21) Anmeldenummer: 00104981.6
(22) Anmeldetag: 09.03.2000
(51) Int. Cl.: G01C 21/32

(54) **Verfahren zur Aktualisierung einer Verkehrswegenetzkarte und kartengestütztes Verfahren zur Fahrzeugführungsinformationserzeugung**

(30) Priorität: 15.04.1999 DE 19916967
(71) Anmelder: DaimlerChrysler AG, 70567 Stuttgart (DE)
(72) Erfinder: Eckstein, Fredy, verstorben (DE); Gimmler, Helmut, 71409 Schwaikheim (DE); Kuhn, Klaus-Peter, Dr., 73655 Plüderhausen (DE); Mezger, Klaus, Dr., 70184 Stuttgart (DE); Renger, Thomas, 12307 Berlin (DE)

(57) **Zusammenfassung**

Die Erfindung bezieht sich auf ein Verfahren zur Aktualisierung einer datenverarbeitungsgestützten Verkehrswegenetzkarte, die Streckendaten über ein befahrbares Verkehrswegenetz und zugeordnete Attributdaten enthält, bei dem durch mindestens ein Probefahrzeug aktuelle Strecken- und Attributdaten vom jeweils befahrenen Streckenabschnitt aufgenommen werden und die Verkehrswegenetzkarte anhand dieser aufgenommenen Daten aktualisiert wird, sowie auf ein Verfahren zur Erzeugung von Fahrzeugführungsinformationen, bei dem die momentane Fahrzeugposition bestimmt wird, diesbezügliche Daten aus einer Attributdaten enthaltenden Verkehrswegenetzkarte ausgelesen und davon abhängig Fahrzeugführungsinformationen erzeugt werden.

Erfindungsgemäß werden als Attributdaten wenigstens ortsgenaue Topographiedaten über den Steigungs- und/oder Kurvenverlauf verwendet, was zur Erzeugung von Fahrzeugführungs-Vorausinformationen genutzt werden kann, wozu die Topographiedaten für einen vorgebbaren Vorausschau-Wegenetzbereich in Fahrtrichtung vor dem Fahrzeug aus der Karte gelesen werden.

Verwendung z.B. für Straßenfahrzeuge.

## Beschreibung

Die Erfindung bezieht sich auf ein Verfahren zur Aktualisierung einer datenverarbeitungsgestützten Verkehrswegenetzkarte nach dem Oberbegriff des Anspruchs 1 sowie auf ein Verfahren zur Erzeugung von Fahrzeugführungsinformationen nach dem Oberbegriff des Anspruchs 3, bei dem eine solche Verkehrswegenetzkarte einsetzbar ist.

Unter einer datenverarbeitungsgestützten Verkehrswegenetzkarte wird dabei eine mittels Datenverarbeitung selbsttätig verwaltete Karte eines von Fahrzeugen befahrbaren Verkehrswegenetzes verstanden, wie z.B. sogenannte digitale Karten. Die Karten beinhalten Strecken- oder Ortsdaten, worunter die Daten verstanden werden, die den Streckenverlauf der befahrbaren Streckenabschnitte des Wegenetzes definieren, und zugeordnete Attributdaten, d.h. Daten über Zusatzeigenschaften der verschiedenen Streckenabschnitte. Diese Attribute umfassen herkömmlicherweise z.B. Informationen, die entlang der tatsächlichen Verkehrswege durch Verkehrsschilder angezeigt werden, wie Streckentyp, Richtungsbefahrbarkeit, Geschwindigkeitsbeschränkungen etc., aber auch Informationen über die zu erwartende Verkehrslage, z.B. sogenannte Ganglinieninformationen. In allen Fällen können die Attributdaten mit Zeitbezug in der Karte abgelegt sein, d.h. der Wert eines Attributs kann für verschiedene Jahreszeiten oder Tage oder auch tageszeitabhängig verschieden sein. Anhand der Daten aus einer solchen Verkehrswegenetzkarte lassen sich dann Fahrzeugführungsinformationen erzeugen, z.B. in Form von Routenwahlinformationen über die Wahl einer günstigsten Route zu einem Zielort und/oder in Form von Fahrzeugsteuerungsinformationen zur Unterstützung des Fahrers bei der Fahrzeugführung oder zur autonomen Fahrzeugführung.

Durch die Verwendung eines oder mehrerer Probefahrzeuge, d.h. Fahrzeugen, die zur Aufnahme der erforderlichen aktuellen Orts- und Attributdaten ausgerüstet sind, läßt sich eine laufende oder jedenfalls in verhältnismäßig kurzen Zeitabständen, z.B. stündlich oder täglich, erfolgende Aktualisierung der Verkehrswegenetzkarte realisieren. Als Probefahrzeuge können insbesondere die ohnehin vorhandenen und benutzten Fahrzeuge eingesetzt werden, so daß im allgemeinen keine speziellen Fahrten nur für den Zweck der Kartenaktualisierung erforderlich sind.

Ein gattungsgemäßes Verfahren zur Aktualisierung einer digitalen Straßenkarte ist in der Patentschrift DE 195 25 291 C1 beschrieben. Beim dortigen Verfahren bestehen die Attribute praktisch ausschließlich aus Informationen über die Zulässigkeit des Befahrens eines jeweiligen Straßenabschnitts in mindestens einer Richtung. Die hierzu in der digitalen Karte abgelegten Attributwerte werden anhand von aktuellen Attributwerten aktualisiert, die vom jeweiligen Probefahrzeug unter Berücksichtigung von dessen fortlaufend bestimmter aktueller geographischer Position aufgenommen werden. Dies geschieht z.B. durch Erkennung entsprechender Verkehrsschilder über eine Videokamera oder implizit dadurch, daß ein die Daten verarbeitender Verkehrsrechner das Befahren eines jeweiligen Straßenabschnitts durch ein Probefahrzeug in der betreffenden Fahrtrichtung erkennt. Um fehlerhafte Zielführungen und Verkehrslenkungen auszuschließen, können alle Straßenabschnitte, für die innerhalb eines vorgegebenen Zeitraums keine aktuellen Attributdaten über die Zulässigkeit des Befahrens aufgenommen worden sind, auf den Attributwert "Befahrung unzulässig" gesetzt werden. Während die Position des Probefahrzeugs gegebenenfalls ortsgenau ermittelt wird, z.B. durch eine GPS-Bestimmung mit zusätzlicher DGPS-Korrektur und optional einem anschließenden sogenannten Map-Matching, ist eine entsprechend ortsgenaue Zuordnung der Attribute dort nicht angesprochen und für die betrachteten Attribute auch nicht erforderlich.

Bei einem in der Offenlegungsschrift DE 196 50 844 A1 beschriebenen Verfahren zur Ermittlung von Fahrtroutendaten ist eine Attributierung, d.h. Attributzuordnung, für eine digitale Wegenetzkarte durch statische und dynamische Parameter vorgesehen. Die statischen Parameter umfassen insbesondere bauliche Merkmale der Verkehrswege, wie Fahrspuranzahl, Vorhandensein einer Steigungs- oder Gefällstrecke und Straßentyp. Die dynamischen Parameter umfassen Informationen über die zu erwartende Verkehrslage bzw. den zu erwartenden Verkehrsfluß, z.B. die Anzahl und die mittlere Geschwindigkeit der Fahrzeuge in einem gegebenen Streckenabschnitt und Zeitraum. Während die dynamischen Parameter anhand fahrzeugseitig aufgenommener Meßdaten aktualisiert werden, werden die Werte der statischen Parameter nicht in dieser Weise angepaßt.

Aus der Offenlegungsschrift DE 37 00 552 A1 ist es bekannt, für eine digitale Straßenkarte sicherheitsrelevante Informationen als Attribute abzuspeichern, die unter anderem das Vorhandensein von Gefällstrecken, Steigungen und Kurven beinhalten und vorab bei der Erstellung der Karte durch spezielle Versuchsfahrzeuge empirisch ermittelt werden. Beim späteren Befahren eines jeweiligen Streckenabschnitts durch ein mit der Karte ausgerüstetes Fahrzeug werden dann die abgespeicherten sicherheitsrelevanten Informationen für den jeweiligen Streckenabschnitt dem Fahrer zur Anzeige gebracht.

Aus der Patentschrift DE 43 44 369 C2 ist ein Verfahren zur verbrauchsorientierten Fahrleistungsbegrenzung eines Fahrzeugantriebs während einer Fahrt zu einem gewünschten Zielort bekannt, bei dem ein Verkehrsrechner während der Fahrt wiederholt auf der Basis eines gemessenen aktuellen Energievorrats einen zulässigen Soll-Streckenverbrauch zur Bewältigung der Strecke bis zum Zielort ermittelt und daraus einen Vorgabewert zur Fahrleistungsbegrenzung derart ableitet, daß die Fahrleistung umso stärker begrenzt wird je kleiner der ermittelte Soll-Streckenverbrauch ist. Zu diesem Zweck werden Kennlinien über den Energieverbrauch benutzt, die streckenspezifisch unterschiedlich vorgegeben werden, unter anderem in Abhängigkeit davon, ob die betreffende Wegstrecke eine hügelige, eine bergige, bergauf führende oder eine leicht bergige, bergab führende Topographie aufweist, wozu entsprechende Streckeninformationen vorab aufgenommen werden, z.B. während einer entsprechenden Probefahrt.

In der Patentschrift DE 195 06 364 C2 ist ein Fahrzeugsteuersystem beschrieben, mit dem eine autonome Führung eines Straßenfahrzeugs unter Verwendung einer digitalen Straßenkarte möglich ist, in welcher fiktive Straßenknoten abgelegt sind, zu denen bevorzugt Verzweigungen, Kreuzungen und Kurven der Straße gehören. Das Fahrzeugsteuersystem leitet anhand dieser Knoteninformationen der digitalen Karte den Krümmungsverlauf des vor dem Fahrzeug liegenden Straßenabschnitts ab und steuert einen entsprechenden Lenkwinkel und eine geeignete Fahrgeschwindigkeit ein.

Der Erfindung liegt als technisches Problem die Bereitstellung eines Verfahrens zur Aktualisierung einer Verkehrswegenetzkarte und eines kartengestützten Verfahrens zur Erzeugung von Fahrzeugführungsinformationen der eingangs genannten Art zugrunde, durch die eine aktuell bleibende Verkehrswegenetzkarte bereitgestellt werden kann, die sich insbesondere auch zur Vorausschätzung des Fahrtenergieverbrauchs und/oder als Basis zur Ermittlung vorausschauender Fahrzeugsteuerungsmaßnahmen eignet, und durch die Fahrzeugführungsinformationen erzeugt werden können, die insbesondere den Fahrer unterstützende oder eine autonome Fahrzeugführung ermöglichende, energieverbrauchsoptimierende Fahrzeugsteuerungsinformationen oder energieverbrauchsabhängige Routenwahlinformationen enthalten können.

Die Erfindung löst dieses Problem durch die Bereitstellung eines Verfahrens zur Aktualisierung einer Verkehrswegenetzkarte mit den Merkmalen des Anspruchs 1 und ein Verfahren zur Erzeugung von Fahrzeugführungsinformationen mit den Merkmalen des Anspruchs 3.

Beim Kartenaktualisierungsverfahren nach Anspruch 1 ist charakteristischerweise vorgesehen, daß ortsgenaue Topographiedaten, auch Topologiedaten bezeichnet, über den Steigungs- und/oder Kurvenverlauf wenigstens eines Teils der Streckenabschnitte des abgelegten Verkehrswegenetzes als Attributdaten verwendet werden, wobei zusätzlich je nach Anwendungsfall weitere herkömmliche Attributdaten berücksichtigt werden können. Die ortsgenauen Topographie- und eventuellen weiteren Attributdaten werden in der Karte abgelegt und anhand von diesbezüglichen aktuellen Meßdaten eines jeweiligen Probefahrzeuges aktualisiert. Mit "ortsgenau" ist gemeint, daß die Topographiedaten nicht lediglich topologiebezogen über das bloße Vorhandensein einer Steigungsstrecke, worunter vorliegend auch eine Gefällstrecke verstanden wird, bzw. einer Kurve irgendwo auf einem zwischen zwei Streckenknoten verlaufenden Streckenabschnitt, auch Streckenkante genannt, informieren, sondern weitergehend über die genaue geographische Lage derselben auf der Streckenkante und deren Stärke, z.B. in Form des Steigungswertes bzw. Kurvenkrümmungswertes. Auch die gegebenenfalls weiter vorgesehenen, herkömmlichen Attributdaten, wie typische Verkehrsschildinformationen, werden bevorzugt in dieser Weise ortsgenau in der Wegenetzkarte gespeichert und aktualisiert. Es versteht sich, daß die Attribute zusätzlich, wie üblich, zeitbezogen abgelegt sein können. Außerdem sind sie normalerweise richtungsspezifisch, d.h. sie können an derselben Wegenetzposition für verschiedene Fahrtrichtungen unterschiedliche Werte haben.

Mit dieser Vorgehensweise ist es möglich, die Verkehrswegenetzkarte auf eine Änderung der Streckenführung hin, z.B. wegen einer Baustelle oder eines neuen Streckenabschnitts, sehr rasch und selbsttätig auf den entsprechend aktualisierten Stand zu bringen. Eine solchermaßen stets aktuell gehaltene Verkehrswegenetzkarte kann durch die in ihr enthaltenen ortsgenauen Attributdaten als Basis zur Erzeugung von Fahrzeugführungsinformationen dienen, die solche Informationen benötigen, z.B. für energieverbrauchsoptimierende Fahrzeugführungsmaßnahmen. Es versteht sich, daß unter Aktualisierung vorliegend auch die erstmalige Erstellung einer Verkehrswegenetzkarte bzw. die erstmalige Berücksichtigung eines neu hinzukommenden Streckenabschnitts zu verstehen ist.

In Weiterbildung des Kartenaktualisierungsverfahrens ist nach Anspruch 2 vorgesehen, als Daten eines jeweiligen Attributs neben dem aktuellen Wert und der aktuellen Position auch zuvor für dieses Attribut aufgenommene Werte oder Positionen daraus abgeleitete Größen, wie einen Mittelwert, einen Minimalwert und einen Maximalwert oder andere statistische Kenngrößen hiervon, sowie wie die Anzahl der berücksichtigten, früher aufgenommenen Werte abzuspeichern. Dies kann für eine statistische Attributaktualisierung genutzt werden, bei welcher der in der Karte enthaltene Attributwert und Ort nicht direkt durch einen neu aufgenommenen Attributwert, sondern durch einen relativierten Attributwert und Ort ersetzt wird, in den der neue Attributwert zusammen mit den zusätzlich in der Karte enthaltenen statistischen Daten eingeht. Damit lassen sich grobe Fehlaktualisierungen aufgrund vorheriger Fehlmessungen verhindern.

Das Verfahren zur Fahrzeugführungsinformationserzeugung nach Anspruch 3 macht charakteristischerweise von Attributdaten einer datenverarbeitungsgestützten Verkehrswegenetzkarte Gebrauch, die ortsgenaue Daten der Netzgeometrie, wie oben erläutert, beinhaltet und je nach Anwendungsfall zusätzliche herkömmliche Attributdaten enthalten kann. Auf der Basis einer solchen Karte werden jeweils die zu einem vorgebbaren Vorausschau-Wegenetzbereich, d.h. einem sich von der momentanen Fahrzeugposition bis zu einer vorgebbaren Vorausschaugrenze in der beabsichtigten Fahrtrichtung erstreckenden Bereich des Verkehrswegenetzes, gehörigen Informationen ausgelesen und zur Erzeugung davon abhängiger Fahrzeugführungsinformationen herangezogen. Durch die Berücksichtigung der Attributdaten mit genauem Ortsbezug können Vorausinformationen hoher Genauigkeit und Aktualität für die Fahrzeugführung bereitgestellt werden, z.B. zum vorausschauenden Beschleunigen kurz vor Erreichen einer Bergaufstrecke, zum vorausschauenden Verzögern kurz vor Erreichen einer Bergabstrecke oder einer Kurve, zur Minderung des Energieverbrauchs zum Auffinden einer hinsichtlich Energieverbrauch günstigen Fahrtroute zu einem Zielort etc.

Bei dem nach Anspruch 5 weitergebildeten Verfahren beinhalten die erzeugten Fahrzeugführungsinformationen Parameter über den für eine Fahrt zu einem vorgebbaren Zielort zu erwartenden Energieverbrauch auf den betreffenden Wegenetzabschnitten, wozu insbesondere die abgelegten Informationen über Ausdehnung und Stärke von Steigungs- und Gefällstrecken sowie weiterer verbrauchsrelevanter Attribute benutzt werden. Mit dieser Vorgehensweise kann vorausgeschätzt werden, ob ein gewünschter Zielort mit dem gegenwärtigen Energievorrat noch erreicht werden kann oder eine Energiebetankung notwendig ist. Es versteht sich, daß der Zielort nicht fest vorgegeben werden muß, sondern variabel gehalten werden kann.

In Weiterbildung der Erfindung nach Anspruch 6 wird als Vorausschaubereich ein Vorfeldbereich der momentanen Fahrzeugposition herangezogen, d.h. ein direkt vor dem Fahrzeug liegender Bereich mit einer Länge von typischerweise einigen zehn bis wenigen hundert Metern, und für diesen werden die zugehörigen streckenbezogenen Attributdaten ausgelesen, um z.B. energieverbrauchsoptimierende Informationen zur Steuerung des Fahrzeugs, d.h. zur Beeinflussung von dessen Längs- und Querdynamik, zu erzeugen. Diese können in reinen Anzeigeinformationen für den Fahrer oder in Informationen für ein autonomes Fahrzeugführungssystem bestehen, das dann selbsttätig die entsprechenden Fahrzeugsteuerungseingriffe vornimmt.

Vorteilhafte Ausführungsformen der Erfindung sind in den Zeichnungen veranschaulicht und werden nachfolgend beschrieben. Hierbei zeigen:
- Fig. 1: eine schematische Veranschaulichung einer Kommunikationsstruktur eines Automobils mit der Fähigkeit zur Aktualisierung einer digitalen, attributbehafteten Straßenkarte und zur Erzeugung von Fahrzeugführungsinformationen,
- Fig. 2: eine schematische Funktionsblockdarstellung über das Einspeichern und Auslesen von Attributwerten der digitalen Straßenkarte gemäß Fig. 1,
- Fig. 3: eine schematische Darstellung eines Vorgangs zur Einspeicherung eines aufgenommenen Attributwertes für die digitale Straßenkarte gemäß Fig. 1,
- Fig. 4: eine schematische Funktionsblockdarstellung einer Verbrauchsassistent-Einheit des Fahrzeugs von Fig. 1 und
- Fig. 5: eine schematische Darstellung eines vor dem Fahrzeug von Fig. 1 liegenden Streckenabschnitts zur Veranschaulichung der Arbeitsweise der Vorausschaufunktion der Verbrauchsassistent-Einheit von Fig. 4 auf Basis der gelernten Attribute.

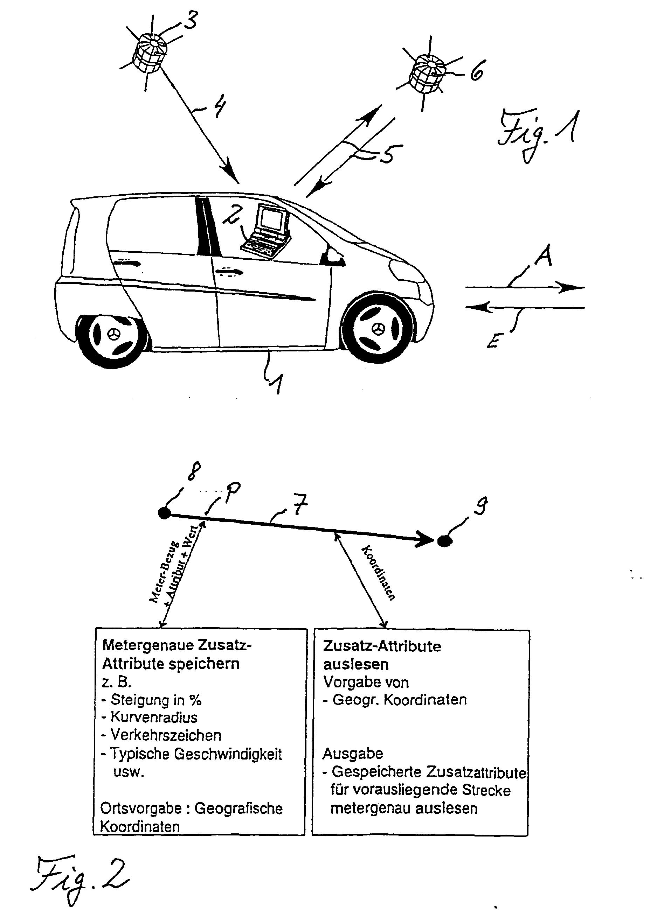

Fig. 1 zeigt in schematischer Darstellung ein Automobil 1, das zur Durchführung erfindungsgemäßer, nachfolgend näher erläuterter Verfahrensvarianten eingerichtet ist, und die dazu implementierte Kommunikationsstruktur. Dabei umfaßt das Automobil 1 diverse Datenverarbeitungskomponenten, insbesondere einen Bordrechner mit zugehöriger Peripherie, die von herkömmlichem Aufbau sind, soweit nachstehend nichts anderes gesagt, und daher in Fig. 1 lediglich symbolisch durch ein Notebook 2 wiedergegeben sind. Die bordeigene Datenverarbeitungselektronik 2 umfaßt insbesondere neben dem eigentlichen Bord- oder Fahrzeugrechner ein Zielführungssystem mit zugehörigen Ortungsmitteln und eine Bordsensorik zur Aufnahme von Meßwerten über Attribute, d.h. streckenbezogene Zusatzinformationen.

Die Ortungsmittel erhalten zur Fahrzeugpositionsbestimmung in üblicher Weise (D-)GPS-Signale von entsprechenden Satelliten 3 über einen zugehörigen unidirektionalen Satellitenkommunikationskanal 4. Über einen bidirektionalen Kommunikationskanal 5, der z.B. ein Satelliten- oder GSM-Kommunikationskanal sein kann, steht das Fahrzeug 1 direkt oder über Satellit 6 mit anderen Straßenfahrzeugen und/oder einer Verkehrszentrale in Datenaustauschverbindung. Die erwähnte Bordsensorik erfaßt Momentanwerte vorgegebener Gelände-/Verkehrsattribute, wie mit einem Pfeil E symbolisiert, die dann zur Aktualisierung einer datenverarbeitungsgestützten Verkehrswegenetzkarte, im vorliegenden Beispiel einer digitalen Straßenkarte, herangezogen werden können. Die digitale Straßenkarte kann dabei in der Bordelektronik 2 des Fahrzeugs 1 selbst oder in einer mit ihr in Verbindung stehenden Zentrale oder einem anderen Fahrzeug implementiert sein. Mit anderen Worten bildet das Fahrzeug 1 ein Probefahrzeug, mit dem während der Fahrt fortwährend Meßdaten über die aktuelle Fahrzeugposition und über zugehörige Gelände- und Verkehrsattribute gewonnen und zur entsprechenden Aktualisierung der digitalen Straßenkarte herangezogen werden. Die auf diese Weise laufend aktuell gehaltene digitale Straßenkarte wird dann von der Bordelektronik 2 dazu genutzt, vorausschauende Informationen über die Gelände- und Verkehrscharakteristika des vor dem Fahrzeug 1 liegenden Streckenabschnitts als fahrzeugführungsrelevante Informationen bereitzustellen, wie mit einem Pfeil A symbolisiert.

Da sich die erfindungsgemäße Vorgehensweise durch geeignete Verwendung von in modernen Fahrzeugen üblichen Hardwarekomponenten realisieren läßt, kann praktisch jedes solche Fahrzeug als Probefahrzeug dienen. Daher kann die Erhebung und Nutzung der Wegenetzinformationen und der Zusatzattribute fahrzeugautonom erfolgen, d.h. nur im eigenen Fahrzeug ohne Informationsaustausch mit anderen Fahrzeugen oder einer Zentrale. Eine hohe Anzahl an Probefahrzeugen verbessert den Aktualisierungsgrad der digitalen Karte. Andererseits können die in verschiedenen Fahrzeugen gewonnenen Informationen auch durch wechselseitigen Austausch bzw. Übermittlung an die Zentrale übergreifend zusammengeführt werden. Durch übliche Telematik-Techniken unter Verwendung der erwähnten Kommunikationskanäle können die aktuellen Daten der Wegenetzkarte jeweils allen Systemteilnehmern, d.h. allen beteiligten Fahrzeugen und ggf. zugehörigen Zentralstellen, zur Verfügung gestellt werden. So kann z.B. die Sammlung von aktuell in verschiedenen Fahrzeugen aufgenommenen ortsgenauen Attributdaten in einer Zentrale vorgesehen sein, die davon abhängig zentral eine von ihr gehaltene datenverarbeitungsgestützte Wegenetzkarte aktualisiert und den angeschlossenen Fahrzeugen die jeweils aktuellen Kartendaten zur Verfügung stellt.

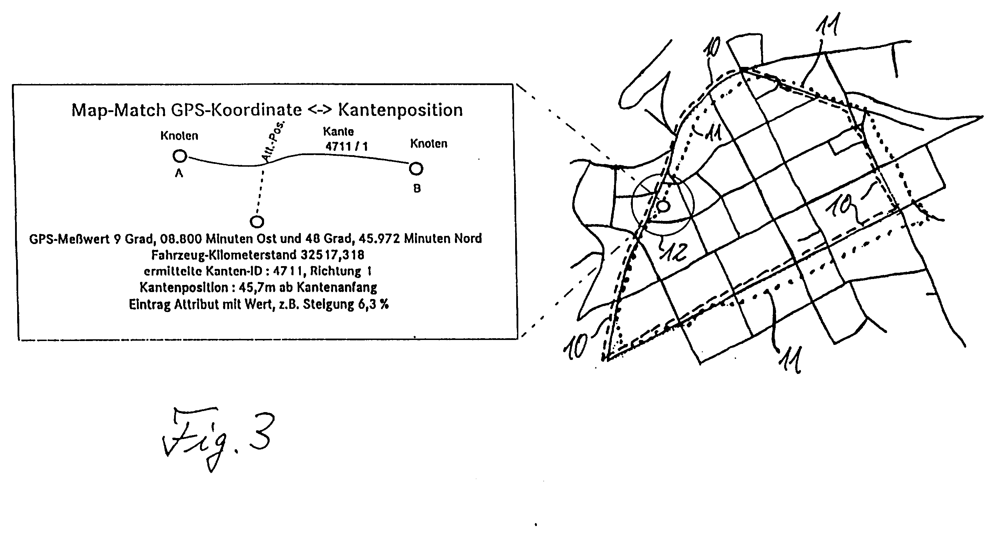

Wesentlich ist bei der vorliegenden Art der Attributierung, d.h. der Zuordnung der Attributwerte zu den Streckenabschnitten der digitalen Straßenkarte, daß sie sich nicht in einer bloßen Zuordnung des gemessenen Attributwertes zum zugehörigen Streckenabschnitt zwischen zwei Streckenknoten erschöpft, sondern ortsgenau erfolgt, nachfolgend auch als "metergenau" bezeichnet. Dies bedeutet, wie in Fig. 2 schematisch dargestellt, daß ein an einer gewissen Stelle P entlang einer Kante 7 des Straßennetzes, d.h. eines richtungsspezifischen Streckenabschnitts zwischen zwei Netzknoten 8, 9, aufgenommener Attributwert in der digitalen Karte nicht der Kante 7 insgesamt, sondern genau der Erfassungsposition P auf derselben zugeordnet wird.

Als Attribute sind insbesondere solche über die geographischen Eigenheiten des Straßennetzes vorgesehen, und zwar bezüglich der geographischen Koordinaten einschließich der Höhe, d.h. dem Steigungsverlauf. Dabei wird nicht nur das Auftreten von Steigungs- bzw. Gefällstrecken und Kurven an sich in der digitalen Karte registriert, sondern auch deren Stärke, z.B. in Form des erfaßten Wertes für die Steigung bzw. für den Kurvenradius. So kann insbesondere eine quasi kontinuierliche Attributierung des Straßennetzes mit den Fahrbahnsteigungs- und Kurvenkrümmungswerten vorgesehen sein.

Ergänzend können je nach Anwendungsfall weitere, an sich bekannte, vorliegend jedoch ortsgenau abgelegte Attribute berücksichtigt werden, wie Geschwindigkeitsattribute über eine typische mittlere Fahrzeuggeschwindigkeit oder eine Geschwindigkeitsbegrenzung mit Angabe einer Höchst- oder Mindestgeschwindigkeit, typische Straßenhinweisschild-Attribute, wie über einen Ortseingang, einen Autobahnanfang, eine Kraftfahrstraße, eine Vorfahrtsstraße etc., typische Verbotsschild-Attribute, wie über ein Überholverbot, eine verbotene Durchfahrt oder ein Verbot für bestimmte Fahrzeuge wie z.B. Motorräder oder Lastkraftwagen, sogenannte POI(point-of-interest)-Attribute, wie über Pannenhilfe, Erste Hilfe, eine Polizeistation, ein Hotel, eine Raststätte oder eine Tankstelle, Beschränkungs-Attribute, z.B. eine maximale Durchfahrtshöhe, ein maximales Fahrzeuggewicht oder eine zeitliche Nutzungsbeschränkung, Fahrtrichtungs-Attribute über Beschränkungen der erlaubten Fahrtrichtungen und insbesondere auch Verkehrslage-Attribute über die im Mittel zu erwartende Verkehrslage bzw. den Verkehrszustand, wie freier Verkehr, reger Verkehr, starker Verkehr, Rush-hour, Stop-&-Go-Verkehr etc.

Es versteht sich, daß diese Attribute je nach Bedarf auch zeitbezogen erfaßt und in der digitalen Karte abgelegt sein können, d.h. daß für denselben Straßenort zu unterschiedlichen Zeiten verschiedene Werte für das jeweilige Attribut in der Karte gehalten werden. Dies ist insbesondere für die Verkehrslage-Attribute von Bedeutung, deren Werte periodisch starken Schwankungen unterliegen können. Außerdem sind die Attribute vorzugsweise auch richtungsgenau, d.h. für denselben Straßenort sind unterschiedliche Werte desselben Attributs für die verschiedenen Fahrtrichtungen möglich. Die jeweils an einer bestimmten Stelle P aufgenommenen Attributwerte können dann zusammen mit der Ortsvorgabe für diesen Streckenpunkt P, d.h. mit den ihn im Wegenetz identifizierenden Daten in Form seiner geografischen Koordinaten ggf. ergänzt durch eine eindeutige Kennung, in der digitalen Karte gespeichert werden. Soweit dort für das jeweilige Attribut noch kein Wert vorliegt, kann eine Erstbelegung erfolgen. Dies gilt auch für den Fall, daß ein noch nicht im abgespeicherten Straßennetz enthaltener Straßenabschnitt befahren wird, der dann zusammen mit dort aufgenommenen Attributwerten erstmals in der digitalen Karte verzeichnet werden kann. Mit anderen Worten beinhaltet das vorliegende Verfahren zur Aktualisierung der digitalen Karte auch deren erstmalige Erzeugung bzw. Aktualisierung anhand eines Netzstruktur-Basisgraphen.

Wenn zu einem aktuell erfaßten Meßwert eines Attributs bereits ein davon abweichender Attributwert in der Karte abgespeichert ist, kann die Kartenaktualisierung in einem einfachen Ersatz des bisherigen durch den neu erfaßten Wert bestehen. Um eine Fehlattributierung durch Meßfehler weitgehend auszuschließen, erfolgt die Aktualisierung jedoch bevorzugt in einer statistisch relativierten Form. Dazu wird dann ein Aktualisierungsalgorithmus vorgesehen, der den neu in der Karte abzulegenden Attributwert anhand eines statistischen Verfahrens aus mehreren zuvor orts-, zeit- und richtungsgenau aufgenommenen Werten bildet, z.B. in Form eines gleitenden Mittelwertes. Dazu werden in der Karte neben dem jeweils geltenden, statistisch relativiert ermittelten Attributwert weitere, zuvor ermittelte Werte des Attributs gehalten, wie zuvor gemessene Werte oder statistische Kenngrößen, die die Gesamtheit der Werte mit relevanten Parametern subsumieren, z.B. ein Minimal-, ein Maximal- und ein Durchschnittswert derselben, sowie die Anzahl solcher gehaltenen Werte.

In analoger Weise werden die zu den Attributen gehörigen Ortsangaben zwar ortsgenau, aber nicht ortsfix von der Karte gelernt, um zu vermeiden, daß einem erfaßten Attribut aufgrund eines Positionsmeßfehlers eine unzutreffende Attributposition zugeordnet wird. Wiederum ist hierzu vorgesehen, mit einem geeigneten, herkömmlichen statistischen Verfahren aus allen zu einem gegebenen Attribut bekannten Positionen innerhalb einer vorzugebenden Toleranz einen gültigen, relativierten Positionswert zu ermitteln und das Attribut der betreffenden Position zuzuordnen. Bei Erfassung eines Attributs eines dem System bekannten Typs außerhalb der vorgegebenen Toleranz, z.B. mehr als 100m von dem bereits bekannten Attribut entfernt, werden die beiden Attribute nicht zusammengelegt, sondern es wird das neu erfaßte Attribut erstmals in die Datenbasis der aktualisierbaren und damit lernfähigen bzw. lernenden Karte eingespeichert.

Die Kartenaktualisierung beinhaltet vorzugsweise auch die Maßnahme, daß jedenfalls ein Teil der Attribute in der Karte nicht zeitlich unbegrenzt einer bestimmten Position zugeordnet gehalten werden. Bei mehrmaligem Nichterkennen eines früher gelernten Attributs durch die Bordsensorik von an der betreffenden Position vorbeifahrenden Probefahrzeugen wird das gelernte Attribut nach einem geeigneten, vorgebbaren Algorithmus gezielt aus der Datenbasis der Karte entfernt. Die so aktualisierte Karte berücksichtigt beispielsweise Wanderbaustellen, bei denen zu einem bestimmten Zeitpunkt eine als Attribut erkannte und erlernte Streckenbeschränkung vorliegt, die zu einem späteren Zeitpunkt wieder entfällt oder sich auf der Strecke verschoben hat. Zur weiteren Verbesserung kann vorgesehen sein, daß Orts- und Attributdaten unabhängig von dem statistischen Verfahren des Lernens nur dann für eine Anwendung bereitgestellt werden, wenn sie einen vorgebbaren Vertrauensgrad besitzen. Der Vertrauensgrad gibt hierbei die Zuverlässigkeit der Attributerkennung an, d.h. wie stark möglicherweise die Erkennung des Attributs durch Fehler in der Sensorik, Rechen- oder Bewertungsfehler, Verdeckungen straßenseitiger Informationsquellen, wie Verkehrsschilder, oder Umwelteinflüsse behindert wird. Weiter kann berücksichtigt werden, wie oft, wie genau usw. ein Attribut ermittelt werden konnte, wobei zur Beurteilung wiederum die statistischen Kenngrößen herangezogen werden können.

Mit anderen Worten kann ausgehend von einer vollständig oder weitgehend leeren digitalen Karte mit dem erfindungsgemäßen Verfahren der gesammte Basisgraph, d.h. das befahrbare Verkehrswegenetz, allein durch die Fahrten der Probefahrzeuge erlernt werden, und die gewünschten Attribute können ihm metergenau erstmals zugeordnet werden. Die Attribute und der Basisgraph lassen sich durch gesicherte Abweichungen korrigieren. Die lernende Karte kann auf diese Weise neue Kreuzungsverläufe, Umgehungsstraßen etc. erlernen und bestehende Basisgraphelemente verändern oder löschen bzw. allmählich 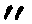 vergessen". Die auf diese Weise stets aktuell gehaltene Karte kann direkt oder über eine Zentrale allen am System beteiligten Fahrzeugen zur Verfügung stehen oder lokal genutzt werden. Die in ihr enthaltenen Informationen können auf verschiedene Weise genutzt werden, wozu jeweils, wie im rechten Block von Fig. 2 illustriert, nach Eingabe der von den Ortungsmitteln festgestellten Fahrzeugposition, z.B. in Form geographischer Koordinaten, die abgelegten Werte entsprechender Attribute ausgelesen werden können, und zwar vorzugsweise nicht nur der für diesen Ort selbst abgelegten Attribute, sondern auch der innerhalb eines vorgebbaren Vorausschaubereichs in Fahrtrichtung vor dem Fahrzeug enthaltenen Attribute. Die letztgenannte Maßnahme ermöglicht die Bereitstellung von Informationen für eine vorausschauende Fahrzeugführung.

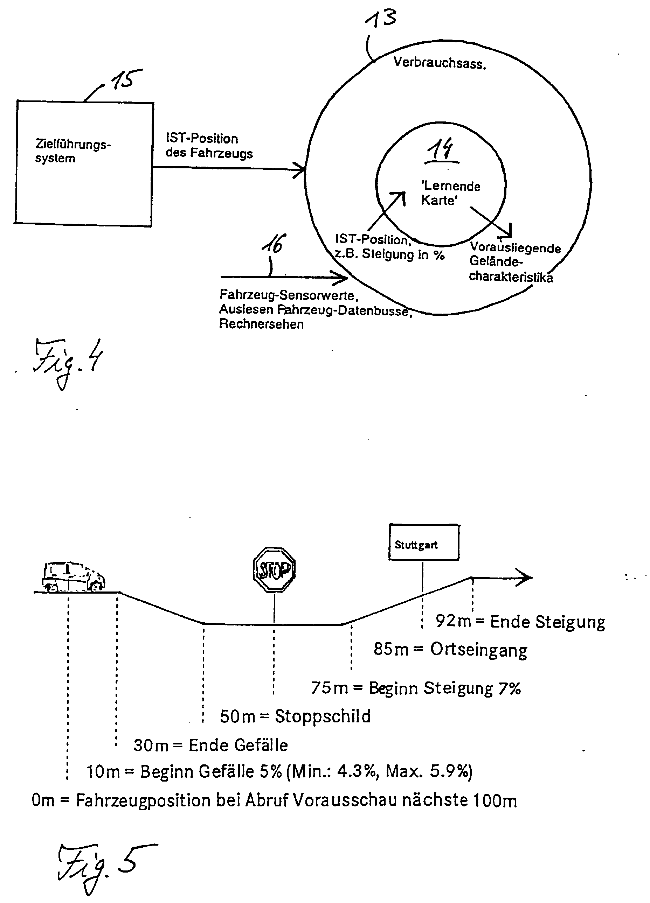

Der typische Ablauf eines Attributierungsvorgangs ist in Fig. 3 veranschaulicht. Das rechte Teilbild zeigt einen Ausschnitt des befahrbaren Straßennetzes, das linke Teilbild enthält in einem Funktionsblock beispielhafte Daten einer konkreten Attributierung. Beispielhaft ist die Befahrung eines gestrichelt markierten Rundkurses 10 angenommen. Dabei wird fortlaufend die Fahrzeugposition unter Verwendung eines GPS-Meßwerts und eines anschließenden Map-Matching bestimmt. Mit letzterem werden die GPS-Meßwerte entlang des Rundkurses 10, die meßfehlerbehaftet geringfügig von der wahren Fahrzeugposition abweichen können und in Fig. 3 beispielhaft mit einer gepunkteten Linie 11 wiedergegeben sind, auf das in der digitalen Karte vorliegende Wegenetz abgebildet. Dazu werden die Ortskoordinatenmeßwerte zusammen mit dem Fahrzeug-Kilometerstand an den die digitale Straßenkarte aktualisierenden Systemteil übergeben, der daraus einen Fangkreis 12 bildet, der die zur gemessenen Fahrzeugposition in Frage kommenden Straßenkanten enthält. Der kartenlernde Systemteil ermittelt dann mit Map-Matching bzw. einem geeigneten herkömmlichen Koppel-Algorithmus diejenige Straßenkante innerhalb des Fangkreises 12, die dem tatsächlichen befahrenen Streckenabschnitt entsprechen sollte und schließt damit irrelevante Straßenkanten weitestgehend aus. Dann wird anhand mehrerer aufeinanderfolgender Positionsbestimmungen die Fahrtrichtung auf der ermittelten Straßenkante festgestellt. Beispielhaft ist in Fig. 3 die Zugehörigkeit der aktuellen Fahrzeugposition zu einer Kante mit Identitätsnummer 4711 und einer ersten Fahrtrichtung (Richtung 1) angenommen. Wenn es sich um ein zeitgenau abzulegendes Attribut handelt, wird zusätzlich die aktuelle Zeit berücksichtigt.

Parallel zur Fahrzeugpositionsbestimmung wird für jedes in der Karte zu speichernde Attribut der aktuelle Attributwert für die momentante Fahrzeugposition aufgenommen. Beispielhaft ist in Fig. 3 die Ermittlung eines Steigungswertes von 6,3% für das Attribut "Steigungsverlauf" wiedergegeben. Aus dem erfaßten Attributwert wird dann ein diesem entsprechender oder ein von diesem und früheren, an dieser Stelle aufgenommenen Attributwerten statistisch abgeleiteter, neuer Attributwert ermittelt und in der digitalen Karte zugeordnet zur festgestellten Position abgespeichert.

In den Fig. 4 und 5 ist beispielhaft eine mögliche Anwendung der lernenden digitalen Straßenkarte, wie sie oben beschrieben wurde, im Rahmen einer Verbrauchsassistent-Funktionalität veranschaulicht. Unter "Verbrauchsassistent" ist dabei ein Systemteil der Fahrzeugbordelektronik zu verstehen, der energieverbrauchsoptimierende Fahrzeugführungsinformationen vorausschauender Art erzeugt, mit denen der Fahrer oder ein autonomes Fahrzeugführungssystem die Fahrweise jeweils rechtzeitig an den bevorstehenden Streckenverlauf so anpassen kann, daß der Energieverbrauch für die Fahrt möglichst gering gehalten wird. Insbesondere können damit vor Kurven sowie vor Steigungs- und Gefällstrecken, aber auch sonstigen Fahrbeeinträchtigungen rechtzeitig verbrauchssenkende Fahrzeugsteuerungsmaßnahmen eingeleitet werden.

Der Verbrauchsassistent-Systemteil 13 enthält neben weiteren, herkömmlichen Komponenten, wie sie sich für den Fachmann aus der nachfolgenden Beschreibung der Funktionsweise des Verbrauchsassistenten 13 ohne weiteres ergeben, insbesondere auch, wie erwähnt, eine lernfähige, aktualisierbare Karte 14 der oben beschriebenen Art. Von einer Positionsmeßeinrichtung oder einem Navigationssystem 15 erhält der Verbrauchsassistent 13 die benötigten Fahrzeugpositionsinformationen. Des weiteren erhält der Verbrauchsassistent 13 aktuelle Attributwerte 16 für die Attribute der Karte 16 in Form von durch die betreffende Sensorik aufgenommenen Werten, die jeweils über Datenbusleitungen geliefert werden. Dies schließt die Möglichkeit der optischen Erkennung mittels eines Bildaufnahme- und Bildauswertesystems ein, auch als "Rechnersehen" bezeichnet. Mit den aufgenommenen Daten wird die Kernfunktionalität 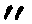 lernende Karte" versorgt, die gegebenenfalls die Karte 14 vom Verbrauchsassistent 13 oder einem anderen Systemteil aktualisiert.

Die lernende Karte 14 besitzt eine Vorausschaufunktionalität, die beinhaltet, daß für einen vorgegebenen Vorfeldbereich, im vorliegenden Beispiel ca. 100m, in Fahrtrichtung vor dem Fahrzeug die innerhalb dieses Bereichs für die befahrene Straßenkante abgelegten Attributwerte bereitgestellt werden können, insbesondere auch der Streckenverlauf. Die dadurch zur Verfügung stehenden Informationen über die vorausliegenden Geländecharakteristika nutzt der Verbrauchsassistent 13 dann zur Erzeugung von vorausschauenden, energieverbrauchssenkenden Fahrzeugsteuerungsmaßnahmen, wie Brems-, Beschleunigungs- und/oder Lenkmaßnahmen.

Fig. 5 zeigt ein konkretes Beispiel einer Anwendung eines solchen Vorausschauvorgangs durch den Verbrauchsassistenten 13. Durch Auslesen der entsprechenden, ortsgenau zugeordneten Attributwerte aus der lernfähigen Straßenkarte 14 erhält der Verbrauchsassistent 13 beispielhaft die Informationen, daß gemessen von der momentanen Fahrzeugposition nach 10m eine Gefällstrecke beginnt, die nach weiteren 20m endet und ein durchschnittliches Gefälle von 5%, ein minimales Gefälle von 4,3% und ein maximales Gefälle von 5,9% besitzt, daß 50m vor dem Fahrzeug ein Stoppschild steht und 75m vor dem Fahrzeug eine Steigungsstrecke beginnt, die 17m lang ist und eine Steigung von 7% aufweist, wobei 85m vor dem Fahrzeug ein Ortseingangsschild steht, das bekanntermaßen gleichzeitig eine Geschwindigkeitsbegrenzung darstellt. Mit diesen Informationen ist der Verbrauchsassistent 13 in der Lage, vorausschauende Fahrzeugsteuerungsmaßnahmen zu erzeugen, mit deren Hilfe dieser Streckenabschnitt mit möglichst geringem Energieverbrauch zurückgelegt werden kann. Insbesondere kann der Verbrauchsassistent 13 zu diesem Zweck schon kurz vor Erreichen der Gefällstrecke oder vor Erreichen des Stoppschildes zur Gaspedalrücknahme und vor Erreichen der Steigung zum rechtzeitigen, weichen Beschleunigen unter Beachtung der durch den Ortseingang folgenden Geschwindigkeitsbeschränkung auffordern oder diese einleiten. In gleicher Weise kann der Verbrauchsassistent 13 bei Erkennung einer Kurve je nach deren Krümmungsradius vorbereitend zu einer entsprechenden Gaspedalrücknahme oder Bremsung auffordern oder diese einleiten.

Die vom Verbrauchsassistent 13 abgegebenen Fahrzeugsteuerungsinformationen können als Fahrhinweise für den Fahrer dienen und werden ihm in diesem Fall geeignet angezeigt. In Fahrzeugen, die mit einem autonomen Fahrzeugführungssystem ausgerüstet sind, können die vom Verbrauchsassistent 13 erzeugten Fahrzeugführungsmaßnahmen zu einer verbrauchsoptimierten autonomen Führung des Fahrzeugs genutzt werden. Es versteht sich, daß die Ausdehnung des Vorausschaubereichs irgendeinen beliebigen, gewünschten Wert haben kann oder auch situationsabhängig variabel gewählt werden kann, z.B. geschwindigkeitsabhängig für höhere Fahrgeschwindigkeiten größer als für niedrigere Geschwindigkeiten.

In einer weiteren Ausführungsform kann der Verbrauchsassistent zur Ermittlung von energieverbrauchsoptimalen Fahrtrouten zu einem Zielort ausgelegt sein. In diesem Fall liest er aus der digitalen Karte 14 die Werte der verbrauchsrelevanten Attribute für den relevanten Wegenetzbereich zwischen dem Fahrzeugstartort und dem Zielort aus und bestimmt anhand dieser Attributdaten mittels eines herkömmlichen Routensuchverfahrens eine Fahrtroute mit möglichst niedrigem Energieverbrauch zum Zielort.

Alternativ zum gezeigten Beispiel kann anstelle der lernfähigen, aktualisierbaren Straßenkarte 14 auch eine nicht-lernende Straßenkarte für den Verbrauchsassistent 13 verwendet werden, welche die erforderlichen energieverbrauchsrelevanten Attributdaten als vorab z.B. anhand von Versuchsfahrten eingespeicherte, nicht laufend aktualisierte Informationen enthält.

Es versteht sich, daß jede der zur Verbrauchsassistent-Funktionalität von Fig. 4 genannten Systemkomponenten wahlweise in Hardware oder Software ausgeführt sein kann.

In einer weiteren Anwendung einer erfindungsgemäß aktualisierten Wegenetzkarte werden auch fahrzeugtypspezifische Attributdaten in ihr gespeichert und zur Erzeugung entsprechend fahrzeugtypspezifischer Fahrzeugführungsinformationen genutzt, um beispielsweise die Verkehrswegenutzung durch spezielle Fahrzeuge, wie Nutzfahrzeuge, insbesondere Gefahrguttransporte, an bestimmten Tageszeiten oder zu bestimmten Wochentagen zu unterbinden. In einer weiteren Anwendung kann die aktualisierbare Wegenetzkarte zur Realisierung eines intelligenten Tempomaten dienen, der stets die höchstzulässige Geschwindigkeit auf der befahrenen Strecke fahrzeugtypbezogen und gegebenenfalls zeitabhängig einstellt. Neben den oben erwähnten Attributdaten können hierzu insbesondere auch Informationen bezüglich Ortseingangsschildern und Lichtsignalanlagen berücksichtigt werden, deren Schaltzustände durch "Rechnersehen" erkannt werden können.

Es versteht sich, daß sich die vorliegende Erfindung nicht nur wie beschrieben für die Straßenverkehrstechnik, sondern auch für die Schienen-, Luft- und Schiffsverkehrstechnik oder Kombinationen hiervon eignet.

## Patentansprüche

1. Verfahren zur Aktualisierung einer datenverarbeitungsgestützten Verkehrswegenetzkarte, die Streckendaten über ein befahrbares Verkehrswegenetz und zugeordnete Attributdaten umfaßt, bei dem
- durch mindestens ein Probefahrzeug (1) aktuelle Strecken- und Attributdaten vom jeweils befahrenen Streckenabschnitt des Verkehrswegenetzes aufgenommen werden und die Verkehrswegenetzkarte (14) anhand der aufgenommenen Strecken- und Attributdaten aktualisiert wird,
**dadurch gekennzeichnet, dass**
- die Attributdaten wenigstens Topographiedaten über den Verlauf von Steigungen und/oder Kurven auf Streckenabschnitten des Verkehrswegenetzes enthalten, wobei die Topographiedaten ortsgenau bezüglich Lage und Stärke der Steigungen und/oder Kurven erfasst und bei der Aktualisierung der Verkehrswegenetzkarte (14) verwendet werden.

2. Verfahren nach Anspruch 1, weiter
**dadurch gekennzeichnet, daß**
für das jeweilige Attribut mehrere zuvor für dieses Attribut aufgenommene Meßwerte oder davon abgeleitete statistische Kenngrößen behalten und zusammen mit dem jeweils jüngsten Meßwert zur Ermittlung eines aktuell abzulegenden Attributwertes herangezogen werden.

3. Verfahren zur Erzeugung von Fahrzeugführungsinformationen oder -maßnahmen, bei dem
- die momentane Fahrzeugposition bestimmt wird, Daten aus einer datenverarbeitungsgestützten, Streckendaten über ein befahrbares Verkehrswegenetz und zugeordnete Attributdaten enthaltenden Verkehrswegenetzkarte (14) ausgelesen und davon abhängig Fahrzeugführungsinformationen für die momentane Fahrzeugposition erzeugt werden,
**dadurch gekennzeichnet, daß**
- als Verkehrswegenetzkarte (14) eine solche verwendet wird, deren Attributdaten wenigstens ortsgenaue Topographiedaten über den Steigungs- und/oder Kurvenverlauf von Streckenabschnitten des Verkehrswegenetzes enthält, und
- als auszulesende Daten wenigstens die Topographiedaten für einen vorgebbaren Vorausschau-Wegenetzbereich ausgelesen und davon abhängige Fahrzeugführungs-Vorausinformationen erzeugt werden.

4. Verfahren nach Anspruch 3, weiter
**dadurch gekennzeichnet, daß**
als Verkehrswegenetzkarte eine gemäß dem Verfahren nach Anspruch 1 oder 2 aktualisiert gehaltene Verkehrswegenetzkarte (14) verwendet wird.

5. Verfahren nach Anspruch 3 oder 4, weiter
**dadurch gekennzeichnet, daß**
als Vorausschau-Wegenetzbereich der Bereich des Verkehrswegenetzes zwischen der momentanen Fahrzeugposition und einem vorgebbaren Zielort herangezogen und abhängig von den für diesen Bereich ausgelesenen Topographiedaten der auf den betreffenden Wegenetzabschnitten zu erwartende Energieverbrauch vorausgeschätzt wird und abhängig vom vorausgeschätzten Energieverbrauch Routenwahlinformationen als Fahrzeugführungs-Vorausinformationen erzeugt werden.

6. Verfahren nach einem der Ansprüche 3 bis 5, weiter
**dadurch gekennzeichnet, daß**
als Vorausschau-Wegenetzbereich ein Vorfeldbereich der momentanen Fahrzeugposition herangezogen und abhängig von den für diesen ausgelesenen Topographiedaten energieverbrauchsoptimierende Fahrzeugsteuerungsinformationen oder -maßnahmen als Fahrzeugführungs-Vorausinformationen erzeugt oder ausgelöst werden.
